(19) Europäisches Patentamt
European Patent Office
Office européen des brevets

(11) **EP 2 060 764 A1**

(12) **EUROPEAN PATENT APPLICATION**
published in accordance with Art. 153(4) EPC

(43) Date of publication:
**20.05.2009 Bulletin 2009/21**

(51) Int Cl.:
*F02D 41/40* (2006.01)    *F02D 41/38* (2006.01)
*F02D 45/00* (2006.01)    *F02M 45/02* (2006.01)

(21) Application number: **07791187.3**

(22) Date of filing: **23.07.2007**

(86) International application number:
**PCT/JP2007/064455**

(87) International publication number:
**WO 2008/026402 (06.03.2008 Gazette 2008/10)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **31.08.2006 JP 2006236242**

(71) Applicant: **Yanmar Co., Ltd.**
**Osaka-shi, Osaka 530-0013 (JP)**

(72) Inventors:
• **KAWARABAYASHI, Mitsuyoshi**
**Osaka-shi**
**Osaka 530-0013 (JP)**

• **IMANAKA, Hajimu**
**Osaka-shi**
**Osaka 530-0013 (JP)**
• **KOBAYASHI, Nobu**
**Osaka-shi**
**Osaka 530-0013 (JP)**

(74) Representative: **Dieckhoff, Beate**
**Jostarndt Patentanwalts-AG**
**Brüsseler Ring 51**
**D-52074 Aachen (DE)**

(54) **METHOD OF CONTROLLING COMMON RAIL FUEL INJECTION DEVICE**

(57)    [Problems] A method for controlling a common-rail fuel injection system, which avoids the adverse effect of the pilot injection on the main injection while driving an engine and maximizes the cleaning up of the exhaust gas by the pilot injection or the like, is provided.

[Means for solving problems] In the common-rail fuel injection system 100 performing a multistage injection, a pilot injection timing θ p at a crankshaft angle and a main injection timing θ m at the crankshaft angle base are controlled by a ECU 70. The ECU 70 calculates a pilot injection interval Tpin at a time base and adjusts the main injection timing θ m when the pilot injection interval Tpin is less than the predefined threshold (1(ms) in the present embodiment).

FIG. 7

## Description

Background of the invention

Field of the Invention

The present invention relates to a technology of a common-rail fuel injection system applied to a diesel engine, more specifically, a method for controlling a main injection timing when performing a multistage injection control.

Related Art

Conventionally, there are a well-known and widely-used technology for reducing PM (Particulate Matter) or Nox (nitrogen oxide) contained in a an exhaust gas, by a multistage injection control which performs multiple injections such as a pre-injection, a pilot injection, a main injection, an after injection and post-injection, provided with common-rail fuel injection system, as an effective means for cleaning up the exhaust gas in a diesel engine.

However, it is known that, when performing the multiple injection control, a fuel injection rate in the main injection is fluctuated, due to a pressure fluctuation caused with the termination of the pilot injection, so that an engine rotation number is unstable. Especially in the idling state having lower engine rotation number, the engine rotation number is susceptibly fluctuated, due to the slight change of the fuel injection rate, thereby causing a problem of undermining the stability of the engine rotation number. In this regard, in order to solve the above-mentioned problem, a technology for controlling the injection condition on the pilot injection, going by the starting of the main injection, so that the period from the termination of the pilot injection and the starting of the main injection is constant, in response to a idling driving state of the engine, is disclosed in JP1998-205383 and become public knowledge.

However, the problem on the pressure fluctuation caused with the termination of the pilot injection is always caused while driving the engine, not apply only to the idling driving state. The injection interval between the pilot and main injections was set up to be longer, so that the pressure fluctuation of the fuels by the pilot injection did not influence the main injection, as the previous way to approach this problem while driving the engine. Accordingly, it was difficult for the technology to be used in the area where the effects such as the cleaning up of the exhaust gas by the pilot injection are most effectively exerted.

In consideration to the above-discussed problems, it's a problem of the invention to provide a method for controlling a common-rail fuel injection system, which avoids the adverse effect of the pilot injection on the main injection while driving the engine and maximizes the cleaning up of the exhaust gas by the pilot injection or the like.

SUMMARY OF THE INVENTION

In a common-rail fuel injection system of the present invention, a method for controlling a common-rail fuel injection system controlling a pilot injection timing based on a crankshaft angle and a main injection timing based on a crankshaft angle by a controller, in the common-rail fuel injection system which performs a multistage injection, comprises the step of calculating a pilot injection interval at a time base by the controller, and adjusting the main injection timing based on crankshaft angle, so as to secure the pilot injection interval at the time base, when the pilot injection interval is the predefined threshold or less.

In the common-rail fuel injection system of the present invention, the pilot injection interval at the time base is calculated and output by the controller, based on the pilot injection timing based on crankshaft angle, the main injection timing based on crankshaft angle and an engine rotation number at the calculation time.

In the common-rail fuel injection system of the present invention, a correction main injection timing at a time base is adopted as the main injection timing, by adjusting so as to delay by the time with a combination of the pilot injection time and the pilot injection interval at the time base, going by the pilot injection timing based on crankshaft angle, based on the pilot injection timing based on crankshaft angle, the pilot injection time and the pilot injection interval at the time base.

According to the present invention, in the area where the main injection quantity is influenced by the pilot injection interval, the fluctuation of the pilot injection interval due to that of the engine rotation number can be prevented.

According to the present invention, the area where the pilot injection interval is controlled by the time base can be decreased, by using the engine rotation number at calculation time as a control element.

Also, the pilot injection interval can be adequately evaluated even at the rapid acceleration/deceleration time.

According to the present invention, the pilot injection interval can be adequately maintained, by correct the main injection timing.

BRIEF DESCRIPTION OF THE DRAWINGS

Fig. 1 is a schematic diagram of an entire construction of a common-rail fuel injection system according to an embodiment of the present invention.
Fig. 2 is a schematic diagram of an entire construction of an injector according to an embodiment of the present invention.
Fig. 3 is a diagram of showing a correlation between a pilot injection interval and a main injection quantity.

Fig. 4 is a diagram of showing a correlation between a pilot injection and a main injection.

Fig. 5 is a diagram of contrasting the respective injection timings on each of the angle and time base.

Fig. 6 is a diagram of contrasting the respective injection timings on each of the angle and time base if Tpin ≧ 1 (ms) (Tpin is 1(ms) or more).

Fig. 7 is a diagram of contrasting the respective injection timings on each of the angle and time base if Tpin < 1 (ms) (Tpin is less than 1(ms)).

Fig. 8 is a flow diagram of calculation of the main injection timing

70

| | |
|---|---|
| ECU | (controller) |
| 100 | common-rail fuel injection system |
| θ p | pilot injection timing (crankshaft angle based) |
| θ m | main injection timing (crankshaft angle based) |
| θ pin | pilot injection interval (crankshaft angle based) |
| Tpin | pilot injection interval (time base) |
| Qp | pilot injection time |
| Qm | main injection time |

**DETAILED DESCRIPTION OF THE INVENTION**

Embodiments of the present invention will be described.

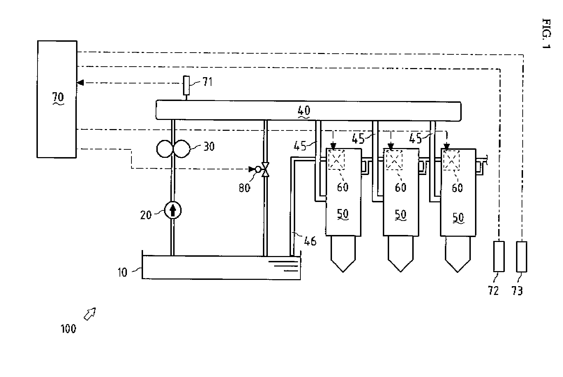

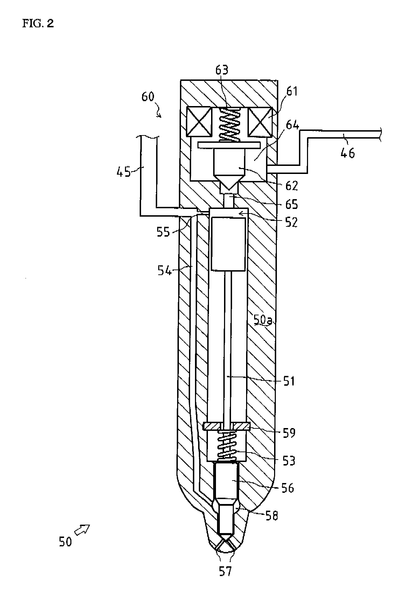

At first, a construction of a common-rail fuel injection system provided with a diesel engine according to embodiments of the present invention will be described, with reference to Fig. 1 or 2.

As shown in Fig. 1, a common-rail fuel injection system 100 comprises plurality of injectors 50 which mainly injects the fuels into the respective machineries and a common-rail 40 which accumulates the highly-pressurized fuels so as to distribute the respective injectors 50.

The injectors 50 are electrically-controlled fuel injection system provided with the respective cylinders when they are multicylinder and is connected to the common-rail 40 via a high-pressure piping 45.

The common-rail 40 is connected to a fuel tank 10 via a low pressure

pump 20 and a high pressure pump 30, as well as it is connected to the fuel tank 10 via a pressure regulation valve 80.

Due to the above construction, the fuels are pumped from the fuel tank

10 via the low pressure pump 20 and the high pressure pump 30 into the common-rail 40, as well as they are accumulated to the given pressure via a discharge rate regulation valve provided with the high pressure pump 30 and the pressure regulation valve 80 into the common-rail 40, so as to be distributed into the respective injectors 50 and be injected into the respective cylinders.

A ECU (Electronic Control Unit: a controller) 70 issues output signals to the injectors 50, based on input signals from the respective sensors as well as an internal memory program and a map data or the like, so as to control the operations of the fuel injections in the injectors 50 or the like.

Also, the ECU 70 is connected to a solenoid valve 60 operating the injectors 50 so as to control an on/off operation of the solenoid valve 60, and is connected to the pressure regulation valve 80 so as to control an on/off operation of the pressure regulation valve 80.

Further, the ECU 70 is connected to a pressure sensor 71 which detects the pressure in the common-rail 40, a rotation number sensor 72 which detects the rotation number of the diesel engine, a load sensor 73 which detects the load of the diesel engine or the like, so that it is constituted so as to detect the operating conditions on the respective portions of the diesel engine and the pressure in the common-rail 40.

Incidentally, descriptions on the respective sensors will be omitted, there

is well-known angle sensor which issues a pulse signal according to the given rotation angle of a crankshaft as the rotation number sensor 72 a, a sensor which detects a depression degree of an accelerator pedal as the load sensor 73 or the like.

Next, constructions/behaviors of the injectors 50 will be described, with reference to Fig. 2.

As shown in Fig. 2, a command piston 51 is vertically, slidably provided

in an injector body 50a. The command piston 51 is biased downwardly due to a fuel pressure

in a control chamber 52. The highly-pressurized fuels supplied from the common-rail 40 to a fuel supply route 54 are supplied via an orifice 55 to the control chamber 52.

The control chamber 52 is provided on the upper side thereof with a solenoid valve 60. The solenoid valve 60 is constituted so that a valving element 62 is withdrawn upward against the biasing force of a spring 63, by energization of a solenoid 61. The switching of the solenoid valve 60 is controlled due to the controller 70. The fuel pressure in the control chamber 52 is discharged via an orifice 65 to a low pressure side piping 46 by the opening of the solenoid valve 60, so as to attenuate the down ward biasing force of the command piston 51

A needle valve 56 is vertically, slidably provided on the lower side of the command piston 51. The upper side of the needle valve 56 abuts on the lower end of the command piston 51. The needle valve 56 is provided at a sliding portion thereof with a nozzle chamber 58. The highly-pressurized fuels supplied from the common-rail 40 to the fuel supply route 54 is supplied to the nozzle chamber 58. The needle valve 56 is provided in a valve casing on the upper side thereof with a cover ring 59, and a spring 53 is interposed between the needle valve 56 and the cover ring 59 so as to bias the needle valve 56 downward.

When the fuel pressure in the control chamber 52 is high and a total of downward biasing forces of the command piston 51 and the spring 53 is larger than the upward biasing force against the needle valve 56 due to the fuel pressure in the nozzle chamber 58, the needle valve 56 is moved downward so as to close discharge orifices 57, 57. Meanwhile, when the solenoid 61 is energized and the raising force against the needle valve 56 by the fuel pressure in the nozzle chamber 58 is larger than a total of the downward biasing force against the needle valve 56 by the command piston 51 and that of the spring 53, the discharge orifices 57, 57 are opened.

Due to the above construction, when the solenoid 60 (the valving element 62) is opened by the control of the ECU 70, the highly-pressurized fuels in the control chamber 52 are discharged via a valve chest 64 to the low pressure side piping 46, so as to lower the pressure in the control chamber 52. At the same time, the downward biasing force against the command piston 51 is lowered, so that the needle valve 56 is lifted due to the fuel pressure (the opening valve pressure) in the nozzle chamber 58. Accordingly, the discharge orifices 57, 57 are opened so as to inject the fuels.

When the solenoid valve 60 (the valving element 62) is closed by the

control of the ECU 70, The pressure of the highly-pressurized fuels is accumulated into the control chamber 52, and the command piston 51 is moved downward by the pressure. Accordingly, the needle valve 56 is moved downward and the discharge orifices 57, 57 are closed so as to terminate the fuel injection.

The construction of the common-rail fuel injection system provided with the diesel engine according to the embodiment of the present invention was described, as identified above.

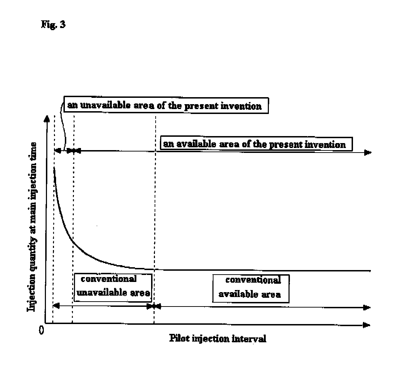

Next, a method for controlling a multistage injection according to an embodiment of the present invention will be described, with reference to Figs. 3 to 8.

As shown in Fig.3, conventionally, it has been confirmed that, while performing the multistage injection, when the interval between the pilot and the main injection was shortened, the pilot injection had an influence on the injection quantity at the main injection time, if the interval to the pilot injection was shorten up to the constant time interval or below. This is a phenomenon caused because the main injection is affected due to the pressure drop when the main injection is performed before the pressure drop is settled down, as a constant time is required until the pressure drop in the nozzle is settled down after the pilot injection. Consequently, the area available (settable) at the pilot injection interval was restricted, so that the pilot injection interval could not be shortened up to a certain time interval or below.

In this regard, in the present invention, the multistage injection is controlled so that a stable injection can be realized, even in the area that was conventionally unavailable (unsettable) at the pilot injection interval

Hereinafter, the control method according to the present invention will be described, showing a concrete flow diagram of calculation of the main injection timing.

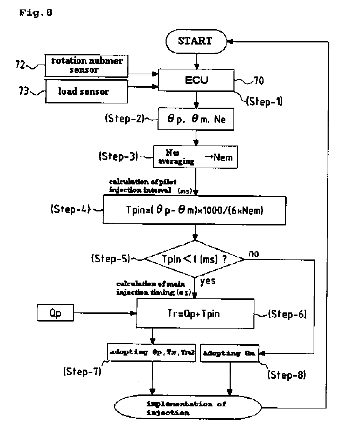

As shown in Fig.8, the ECU 70 is constructed so that it is connected to the rotation number sensor 72 and the load sensor 73 and the signal of the engine rotation number Ne or the other signal is input from these sensors into the ECU 70 so as to recognize the operating (load) condition of the engine based on the values (Step, S 1). The pilot injection timing θ p and the main injection timing θ m suitable for the present operating condition are derived, on the basis of the recognized operating (load) condition (the engine rotation number Ne or the like) and a map information preliminary memorized in the ECU 70 (Step, S2).

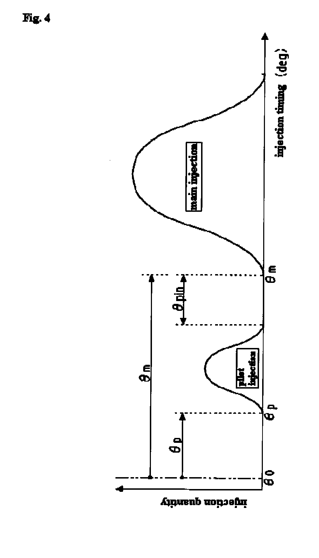

In this case, a correlation between the pilot injection timing θ p and the main injection timing θ m will be represented in Fig. 4.

Specifically, the pilot injection timing θ p and the main injection timing θ m are defined as

the timing based on crankshaft angle (i.e., that the degree is defined as an unit) from a standard timing θ 0.

As shown in Fig. 4, the pilot injection interval θ pin means the interval (phase difference of the crankshaft angle) from the termination of the pilot injection to the starting of the main injection (i.e., the main injection timing θ m). Incidentally, the TDC in the injection one before the injection of the controlled object or the like can be adopted as the standard timing θ 0.

As shown in Fig. 8, the engine rotation number Ne is averaged so as to derive an average engine rotation number Nem, and the average engine rotation number Nem is adopted as an engine rotation number, thereby removing an effect caused by the minimal rotation fluctuation of the engine(Step, S 3).

Accordingly, the pilot injection interval Tpin at the after-mentioned time base is set up to be kept approximately constant regardless of the engine rotation number. Specifically, the engine rotation number Ne is averaged due to ten times

or more time for the threshold of the pilot injection interval Tpin at the after-mentioned time base (1(ms), in the present embodiment) so as to derive the average engine rotation number Nem. A filter having an equivalent time constant may be utilized instead of performing the averaging procedure.

As shown in Fig. 8, the pilot injection interval θ pin based on crankshaft angle is converted to the pilot injection interval Tpin at the time base, on the basis of the following formula (Step, S4).

$$\mathrm{Tpin} = (\theta\,\mathrm{p} - \theta\,\mathrm{m}) * 1000/(6 * \mathrm{Nem})$$

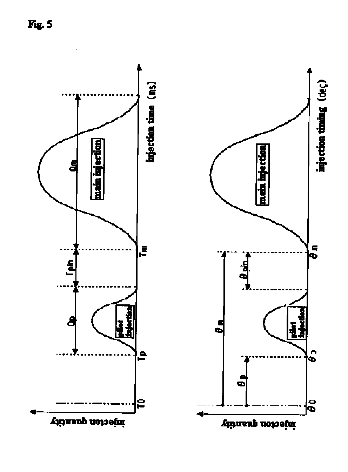

In this case, a correlation of the pilot injection timing θ p, the main injection timing θ m and the pilot injection interval θ pin with the pilot injection interval Tpin, the pilot injection time Qp and the main injection time Qm will be indicated as Fig. 5.

As shown in Fig. 8, the main injection timing θ m is evaluated on the basis of the pilot injection interval Tpin calculated by the formula 1 (Step, S5).

More specifically, when the pilot injection interval Tpin is the threshold (1(ms), in the present embodiment) or more, the main injection timing θ m is directly adopted as the main injection timing and is synchronized with the crankshaft angle obtained from a crank pulse so as to be set up to start the main injection at the main injection timing θ m (Step, S8).

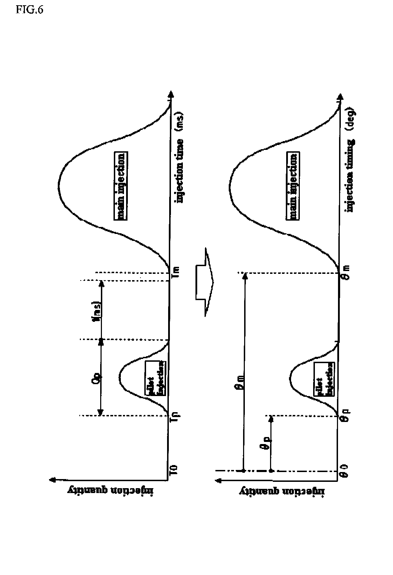

In this case, a correlation of the pilot injection timing θ p, the main injection timing θ m and the pilot injection interval θ pin with the pilot injection interval Tpin and the pilot injection time Qp will be indicated as Fig. 6.

As shown in Fig. 8, when the pilot injection interval Tpin is less than the threshold (1(ms), in the present embodiment), the main injection timing θ m is defined as the timing delaying by a correction time Tr (i.e., a correction main injection timing Tm2), going by the pilot injection timing θ p, by calculating the correction time Tr (ms) with a combination of the pilot injection time QP and the pilot injection interval Tpin. In this respect, the correction time Tr is calculated by the following formula.

$$Tr = Qp + Tpin$$

In this case (i.e., when the pilot injection interval Tpin is less than the threshold), the correction main injection timing Tm2 after a lapse of Tr from the θ p is adopted as the main injection timing, based on the pilot injection timing θ p based on crankshaft angle, regardless of the engine rotation number (Step, S 7).

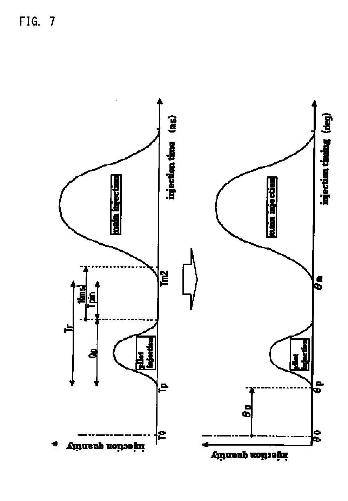

In this case, a correlation of the pilot injection timing θ p, the main injection timing θ m, the correction time Tr and the correction main injection timing Tm2 with the pilot injection interval Tpin and the pilot injection time Qp will be indicated as Fig. 7.

As shown in Fig. 8, a series of control operations are terminated based on the above-mentioned steps, and is moved to the upcoming control. Accordingly, the pilot injection interval is continuously controlled.

Incidentally, in the present embodiment, the threshold is set up as 1 (ms), but it is not limited to this.

Specifically, as shown in Fig. 7, when the pilot injection interval Tpin at the time base is less than the threshold, the pilot injection interval Tpin is controlled to be constant regardless of the engine rotation number, by delaying by Tr (ms) with a combination of the pilot injection time Qp and the time-converted pilot injection interval Tpin, based on the pilot injection timing θ p as the main injection timing.

In this respect, the engine rotation number Ne used in converting the

pilot injection timing θ p based on crankshaft angle to the pilot injection interval Tpin at the time base is averaged and filtered, and the average engine rotation number Nem, which the harmful minimal rotation fluctuation is removed, is adopted, so that the pilot injection interval Tpin can be constant regardless of the engine rotation number.

Consequently, when the pilot injection interval Tpin is the threshold or more, the main injection timing θ m is synchronized with the crankshaft angle, so that the engine can be adequately controlled, while even when the pilot injection interval Tpin is less than the threshold, the pilot injection interval Tpin is adequately maintained independently of the fluctuation of the engine rotation number, thereby securing the stability of the engine rotation number.

Incidentally, with respect to the actual control operation, the respective controls for

the pilot injection and the main injection are performed by variably controlling the

energizing timing and the energizing time of the pulse current to the solenoid 61.

Specifically, the pilot injection timing θ p and the pilot injection time

Qp are derived based on the map information memorized in the ECU 70, as well as the pulse current is energized to the solenoid 61, at the timing synchronized with this pilot injection timing θ p, and during the time corresponding to the pilot injection time Qp.

By the same token, the main injection timing θ m and the main injection

time Qm are derived based on the map information memorized in the ECU 70, as well as the pulse current is energized to the solenoid 61, at the timing synchronized with this main injection timing θ m and during the time corresponding to the main injection time Qm.

In the respective pilot and main injections, the injections are started by way of a certain response lag, in response to the on/off operation of the pulse current.

The method for controlling the multistage injection according to the present invention was described, as identified above.

As shown in the above-mentioned description, in the common-rail fuel injection system 100 performing the multistage injection, with respect to the method for controlling the common-rail fuel injection system 100 which controls the pilot injection timing θ p based on crankshaft angle and the main injection timing θ m based on crankshaft angle by the ECU 70, the pilot injection interval Tpin at the time base is calculated by the ECU 70, and when the pilot injection interval Tpin is less than the predefined threshold (1(ms) in the present embodiment), the correction main injection timing Tm2 is adopted, so as to secure the pilot injection interval Tpin at the time base.

In other words, in the area where the main injection quantity is affected by the pilot injection interval Tpin, the fluctuation of the pi lot injection interval Tpin due to

the fluctuation of the engine rotation number can be prevented.

The pilot injection interval Tpin at the time base is set up to be calculated and output by the ECU 70, based on the pilot injection timing θ p based on crankshaft angle, the main injection timing θ m based on crankshaft angle, and the engine rotation number Ne at the calculation time.

Briefly, the area where the pilot injection interval Tpin is controlled by

the time base can be reduced, by using the engine rotation number at the calculation time as the control element. The pilot injection interval Tpin can be adequately evaluated, even at the rapid acceleration/deceleration time.

The correction main injection timing Tm2 is set up so that it becomes the timing that the pilot injection time Qp and the pilot injection interval Tpin at the time base are delayed by the time Tr (ms), going by the pilot injection timing θ p at the crankshaft angle, based on the pilot injection timing θ p at the crankshaft angle, the pilot injection time Qp and the pilot injection interval Tpin at the time base.

Briefly, the pilot injection interval Tpin can be adequately maintained by correcting the main injection timing θ m

The present invention is applicable in the common-rail fuel injection system applied to the diesel engine.

**Claims**

1. A method for controlling a common-rail fuel injection system, controlling a pilot injection timing based on crankshaft angle and a main injection timing based on crankshaft angle by a controller, in the common-rail fuel injection system which performs a multistage injection, comprising the step of:

    calculating a pilot injection interval at a time base by the controller, and
    adjusting the main injection timing based on crankshaft angle, so as to secure the pilot injection interval at the time base, when the pilot injection interval is less than the predefined threshold.

2. The method for controlling the common-rail fuel injection system as set forth in claim 1, wherein the pilot injection interval at the time base is calculated and output by the controller, based on the pilot injection timing based on crankshaft angle, the main injection timing based on crankshaft angle and an engine rotation number at a calculating time.

3. The method for controlling the common-rail fuel injection system as set forth in claim 1, wherein a correction main injection timing at a time base is adopted as the main injection timing, by adjusting so as to delay by the time with a combination of the pilot injection time and the pilot injection interval at the time base, going by the pilot injection timing based on crankshaft angle, based on the pilot injection timing based on crankshaft angle, the pilot injection time and the pilot injection interval at the time base.

FIG. 1

FIG. 2

Fig. 3

Pilot injection interval

Fig. 4

Fig. 5

FIG.6

FIG. 7

Fig. 8

<table>
<tr><td colspan="2"><strong>INTERNATIONAL SEARCH REPORT</strong></td><td>International application No.<br>PCT/JP2007/064455</td></tr>
</table>

| A. CLASSIFICATION OF SUBJECT MATTER |
|---|
| *F02D41/40*(2006.01)i, *F02D41/38*(2006.01)i, *F02D45/00*(2006.01)i, *F02M45/02* (2006.01)i |

According to International Patent Classification (IPC) or to both national classification and IPC

| B. FIELDS SEARCHED |
|---|
| Minimum documentation searched (classification system followed by classification symbols)<br>F02D41/40, F02D41/38, F02D45/00, F02M45/02 |

Documentation searched other than minimum documentation to the extent that such documents are included in the fields searched
Jitsuyo Shinan Koho          1922-1996     Jitsuyo Shinan Toroku Koho    1996-2007
Kokai Jitsuyo Shinan Koho    1971-2007     Toroku Jitsuyo Shinan Koho    1994-2007

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 10-205383 A  (Isuzu Motors Ltd.),<br>04 August, 1998 (04.08.98),<br>Par. Nos. [0019], [0020], [0023], (10), (11);<br>Par. No. [0025]; Figs. 1 to 3<br>(Family: none) | 1-3 |
| Y | JP 2005-163639 A  (Denso Corp.),<br>23 June, 2005 (23.06.05),<br>Par. No. [0062]; Figs. 1, 4<br>(Family: none) | 1-3 |
| A | JP 63-005140 A  (Diesel Kiki Co., Ltd.),<br>11 January, 1988 (11.01.88),<br>Claims<br>& US 4782803 A          & GB 2193585 A<br>& DE 3720544 A1         & KR 9001629 B | 1-3 |

☐ Further documents are listed in the continuation of Box C.          ☐ See patent family annex.

| | |
|---|---|
| *    Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>30 October, 2007 (30.10.07) | Date of mailing of the international search report<br>13 November, 2007 (13.11.07) |
|---|---|
| Name and mailing address of the ISA/<br>Japanese Patent Office | Authorized officer |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10205383 A